# FASCICULE DE BREVET EUROPEEN

(11) **EP 3 888 342 B1**
(45) Date de publication et mention de la délivrance du brevet: **09.11.2022**
(21) Numéro de dépôt: 19808811.4
(22) Date de dépôt: 26.11.2019
(51) Int. Cl.: H04M 3/02, H04M 3/42, H04M 1/725

(54) **PROCÉDÉ ET DISPOSITIF D'AFFICHAGE DE DONNÉES DE COMMUNICATION**
VERFAHREN UND VORRICHTUNG ZUR ANZEIGE VON KOMMUNIKATIONSDATEN
METHOD AND DEVICE FOR DISPLAYING COMMUNICATION DATA

(30) Priorité: 27.11.2018 FR 1871940
(43) Date de publication de la demande: 06.10.2021
(73) Titulaire: La Team, 06560 Valbonne (FR)
(72) Inventeur: CASTELLANI, Emmanuel, 06140 TOURRETTES SUR LOUP (FR); MIGLIOR, David, 06000 NICE (FR); MIGLIOR, Michael, 13006 MARSEILLE (FR); PHILIBERT, Baptiste, 06130 GRASSE (FR); MEONI, Christophe, 06200 NICE (FR)
(74) Mandataire: Hautier IP
(86) Numéro de dépôt international: PCT/EP2019/082523
(87) Numéro de publication internationale: WO 2020/109279

(56) Documents cités:
- EP-A1- 2 712 152
- FR-A1- 3 033 222

## Description

### Domaine technique

La présente invention concerne le domaine de la télécommunication en général, et plus particulièrement de la mise en communication entre une personne âgée et ses proches.

### Etat de la technique

Alors que le monde n'a jamais connu de son histoire autant de moyens de communication, il est un groupe de la population qui présente de grandes difficultés pour utiliser ces nouvelles technologies.

En effet, les personnes âgées souffrent de ne pas pouvoir maitriser ces technologies et de ce fait se retrouvent bien souvent coupées du monde et plus grave encore de leurs proches.

Des solutions ont été tentées. Par exemple, des téléphone portables dits simplifiés et présentant de larges touches sont destinés aux séniors. Néanmoins, ce type de téléphone reste difficile à maitriser et surtout ne permet pas par exemple d'établir une communication audiovisuelle. Et en ce qui concerne la lecture ou l'envoi de messages texte, c'est quasiment impossible compte tenu de la petite taille de l'écran.

Dès lors une assistance est nécessaire pour permettre par exemple d'établir une communication audiovisuelle avec ses proches.

La problématique est la même avec les réseaux sociaux et les photos que les proches peuvent poster mais que les séniors ne peuvent aisément consulter.

Il existe donc un réel problème d'accessibilité aux technologies de télécommunication pour les personnes âgées.

Le document FR 3 033 222 concerne un procédé de partage de flux audio et/ou vidéo, mis en oeuvre dans un premier terminal de communication appartenant à un réseau domestique, lors d'un appel téléphonique entre ce premier terminal et un second terminal de communication. Ce document ne permet pas de résoudre la problématique mentionnée ci-dessus.

La présente invention vise à résoudre au moins en partie les problématiques exposées ci-dessus.

### Résumé

La présente invention concerne un procédé d'affichage d'au moins une donnée de communication sur au moins un dispositif d'affichage, tel qu'un téléviseur, disposé dans un espace de vie d'au moins un résident, ladite donnée de communication étant prise parmi au moins : un texte, une image, un flux de données audio et/ou vidéo, une demande d'appel audio et/ou vidéo, un enregistrement audio et/ou vidéo, ledit procédé d'affichage comprenant au moins les étapes suivantes :
- Réception par un dispositif électronique, situé dans ledit espace de vie, d'au moins une première donnée de communication depuis au moins un serveur informatique en communication avec le dispositif électronique au travers au moins d'un réseau de communication ;
- Envoi par le dispositif électronique d'au moins une notification à au moins un dispositif de commande comprenant un unique bouton de commande ;
- Réception de ladite notification par ledit dispositif de commande ;
- Puis, génération par ledit dispositif de commande d'au moins une notification à destination dudit résident, ladite notification étant prise parmi au moins : une notification visuelle, une notification auditive, une notification tactile ;
- En réponse à ladite notification, actionnement de l'unique bouton de commande du dispositif de commande par au moins un doigt du résident, et
- En réponse audit actionnement, envoi par le dispositif de commande d'une donnée de commande vers le dispositif électronique au travers d'une communication non filaire ;
- Réception par le dispositif électronique de ladite donnée de commande depuis le dispositif de commande ;
- Envoi depuis le dispositif électronique de la première donnée de communication vers le dispositif d'affichage ;
- Affichage par ledit dispositif d'affichage de ladite première donnée de communication.

La présente invention permet à un résident d'une maison de retraite par exemple, ou plus généralement à une personne âgée, de recevoir des nouvelles de ses proches directement sur sa télévision simplement en actionnant un bouton de commande.

En effet, la présente invention simplifie la mise en communication entre une personne âgée et ses proches. Elle permet d'envoyer des photos ou des messages textes directement à la personne âgée qui verra alors s'afficher son écran de télévision les photos ou les messages textes.

De manière très avantageuse, une communication audiovisuelle peut être instaurée entre le résident et ses proches et cela par simple actionnement par le résident d'un dispositif de commande, par exemple, en le touchant ou en appuyant dessus.

Le résident n'a pas besoin de connaissance ou d'une maîtrise particulière des nouvelles technologies, il lui suffit de savoir appuyer ou de savoir toucher un dispositif de commande afin d'accepter une communication, de recevoir un message ou une photo, voire même de demander une communication avec ses proches.

La présente invention simplifie la technologie pour permettre à nos aînés de rester au plus près de nous.

La présente invention concerne aussi un système implémentant un tel procédé.

La présente invention concerne aussi un système d'affichage d'au moins une donnée de communication sur au moins un dispositif d'affichage configuré pour afficher ladite donnée de communication et étant disposé dans un espace de vie d'au moins un résident comprenant au moins un dispositif électronique et au moins un dispositif de commande, le dispositif électronique et le dispositif de commande étant configurés pour exécuter au moins certaines des étapes du procédé d'affichage selon la présente invention.

La présente invention concerne également un système d'affichage d'au moins une donnée de communication sur au moins un dispositif d'affichage configuré pour afficher ladite donnée de communication et étant disposé dans un espace de vie d'au moins un résident comprenant au moins :
- Un dispositif électronique étant configuré pour :
   - recevoir au moins ladite donnée de communication depuis au moins un serveur informatique,
   - envoyer au moins ladite donnée de communication, et de préférence au moins une instruction d'affichage, audit dispositif d'affichage ;
   - envoyer au moins une notification à au moins un dispositif de commande ;
   - recevoir au moins une donnée de commande depuis au moins un dispositif de commande ;
- Ledit dispositif de commande comprenant un unique bouton de commande et étant configuré pour :
   - recevoir au moins ladite notification depuis ledit dispositif électronique ;
   - générer au moins une notification prise parmi au moins : une notification visuelle, une notification auditive, une notification tactile ;
   - émettre ladite donnée de commande vers ledit dispositif électronique au moyen d'une communication sans fil par actionnement dudit bouton de commande par au moins un doigt d'un résident.

La présente invention utilise la technologie pour simplifier son utilisation auprès de personnes âgées. Ainsi la présente invention permet simplement de faire communiquer une personne âgée avec ses proches au moyen de sa télévision.

La présente invention simplifie l'interaction de la personne âgée avec les technologies de télécommunication en simplement lui demandant d'actionner un bouton de commande afin de recevoir des nouvelles de sa famille, voire de leur en donner.

La présente invention concerne également un produit-programme d'ordinateur, de préférence stocké sur un support non transitoire, comprenant des instructions, qui lorsqu'elles sont exécutées par au moins un microprocesseur, effectue les étapes du procédé selon la présente invention.

Les autres objets, caractéristiques et avantages de la présente invention apparaîtront à l'examen de la description suivante et des dessins d'accompagnement. Il est entendu que d'autres avantages peuvent être incorporés.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 illustre un système selon un mode de réalisation de la présente invention
La figure 2 illustre un procédé d'affichage d'au moins une donnée de communication selon un mode de réalisation de la présente invention.
La figure 3 illustre un procédé d'affichage d'au moins une donnée de communication selon un autre mode de réalisation parfaitement compatible avec le mode de réalisation de la figure 2.

Les dessins joints sont donnés à titre d'exemples et ne sont pas limitatifs de l'invention. Ces dessins sont des représentations schématiques et ne sont pas nécessairement à l'échelle de l'application pratique.

### Description détaillée

Avant d'entamer une revue détaillée de modes de réalisation de l'invention, sont énoncées ci-après des caractéristiques optionnelles qui peuvent éventuellement être utilisées en association ou alternativement :
- Avantageusement, la présente invention comprend au moins une étape d'envoi depuis le dispositif électronique vers le dispositif d'affichage d'au moins une instruction de basculement depuis une première source vidéo vers une deuxième source vidéo, avant et/ou après la réception de la donnée de commande par le dispositif électronique depuis le dispositif de commande. Cela permet d'afficher la donnée de communication sur la télévision d'un résident sans que celui-ci ne doive basculer manuellement d'une source vidéo vers une autre.
- Avantageusement, la présente invention comprend au moins une étape de stockage de la première donnée de communication dans au moins un module de stockage non transitoire dudit dispositif électronique, avant et/ou après l'étape l'envoi par le dispositif électronique de la notification au dispositif de commande. Cela permet de visionner plus tardivement la donnée de communication, par exemple si le résident souhaite la revoir ou s'il n'est pas disponible au moment de la réception par le dispositif électronique de cette donnée de communication.
- Avantageusement, la présente invention comprend, après l'étape de réception par le dispositif électronique de la donnée de commande depuis ledit dispositif de commande, au moins les étapes suivantes :
   - Envoi par ledit dispositif électronique vers au moins un serveur informatique d'au moins un premier flux de données audio et/ou vidéo ;
   - Réception par le dispositif électronique d'au moins un deuxième flux de données audio et/ou vidéo depuis un serveur informatique, le deuxième flux de données audio et/ou vidéo provenant d'au moins un terminal utilisateur. Cela permet d'établir une visioconférence entre le résident et son ou ses proches.
- Avantageusement, la présente invention comprend, avant l'étape d'envoi par ledit dispositif électronique vers au moins un serveur informatique d'au moins un premier flux de données audio et/ou vidéo, au moins les étapes suivantes :
   - Envoi depuis le dispositif électronique d'au moins une instruction d'activation d'au moins un module de capture audio et/ou d'au moins un module de capture vidéo respectivement vers au moins un module de capture audio et/ou vers au moins un module de capture vidéo ;
   - Réception par le module de capture audio et/ou le module de capture vidéo de l'instruction d'activation depuis le dispositif électronique ;
   - Activation du module de capture audio et/ou du module de capture vidéo ;
   - Envoi par le module de capture audio et/ou par le module de capture vidéo du premier flux de données audio et/ou vidéo vers le dispositif électronique ;
   - Réception par le dispositif électronique du premier flux de données audio et/ou vidéo depuis respectivement le module de capture audio et/ou le module de capture vidéo ;
- Avantageusement, la présente invention comprend, avant l'étape d'envoi par ledit dispositif électronique vers au moins un serveur informatique d'au moins un premier flux de données audio et/ou vidéo, au moins les étapes suivantes :
   - Envoi depuis le dispositif électronique d'au moins une instruction d'activation d'au moins un module de capture vers au moins un module de capture, le module de capture étant pris parmi au moins un module de capture audio et/ou un module de capture vidéo ;
   - Réception par le module de capture de l'instruction d'activation depuis le dispositif électronique ;
   - Activation du module de capture ;
   - Envoi par le module de capture du premier flux de données audio et/ou vidéo vers le dispositif électronique ;
   - Réception par le dispositif électronique du premier flux de données audio et/ou vidéo depuis le module de capture.
- Avantageusement, la présente invention comprend, avant et/ou après l'envoi depuis le dispositif électronique de la première donnée de communication vers le dispositif d'affichage, au moins une étape d'envoi depuis le dispositif électronique d'au moins une instruction d'affichage de la donnée de communication vers le dispositif d'affichage.
- Avantageusement, l'envoi depuis le dispositif électronique d'au moins une instruction d'affichage de la donnée de communication vers le dispositif d'affichage est réalisé au travers d'au moins une liaison optique entre le dispositif électronique et le dispositif d'affichage, de préférence au travers de l'envoi d'au moins un signal infrarouge depuis le dispositif électronique vers le dispositif d'affichage.
- Avantageusement, la présente invention comprend, avant l'étape de réception par le dispositif électronique d'au moins une première donnée de communication depuis au moins un serveur informatique, les étapes suivantes :
   - Actionnement dudit unique bouton de commande par au moins un doigt dudit résident ;
   - En réponse audit actionnement, envoi par ledit dispositif de commande d'une donnée de commande préliminaire vers le dispositif électronique ;
   - Réception par ledit dispositif électronique d'au moins une donnée de commande préliminaire depuis ledit dispositif de commande ;
   - Envoi par le dispositif électronique d'au moins une donnée de communication préliminaire vers au moins un serveur informatique ;
   - Réception par le serveur informatique de ladite donnée de communication préliminaire depuis le dispositif électronique ;
   - Envoi par le serveur informatique de ladite donnée de communication préliminaire vers au moins un terminal utilisateur. Cela permet au résident d'envoyer une demande de visioconférence à l'un de ses proches.
- Avantageusement, la donnée de communication préliminaire comprend une demande d'appel audio et/ou vidéo.
- Avantageusement, la première donnée de communication est prise parmi : un texte, une image, un flux de données audio et/ou vidéo, une demande d'appel audio et/ou vidéo.
- Avantageusement, l'unique bouton de commande est un bouton poussoir et/ou un capteur tactile, comme par exemple un détecteur de contact physique. Cela permet d'actionner très simplement le dispositif de commande.
- Avantageusement, le dispositif de commande est configuré pour être porté par le résident, de préférence sous la forme d'une broche, d'un badge ou d'un bracelet. Cela permet au résident de conserver sur lui le dispositif de commande et ainsi de pouvoir l'actionner à la réception d'une notification ou alors à sa convenance.
- Avantageusement, le dispositif de commande est conformé pour tenir dans la main d'un résident. Cela permet de rendre ergonomique le dispositif de commande.
- Avantageusement, le dispositif de commande comprend une source d'alimentation électrique. Cela permet que le dispositif de commande soit mobile avec le résident.
- Avantageusement, le dispositif électronique pilote le dispositif d'affichage au moyen d'une liaison optique et/ou électrique. Cela permet d'ajuster par exemple le volume de la télévision ou encore de basculer la source vidéo tout en transmettant la donnée de communication à afficher.
- Avantageusement, le dispositif électronique pilote le dispositif d'affichage au moyen d'une liaison électrique.
- Avantageusement, le dispositif électronique pilote le dispositif d'affichage au moyen d'une liaison optique.
- Avantageusement, le dispositif d'affichage comprend au moins une entrée audio et/ou vidéo configurée pour recevoir au moins un flux de données audio et/ou vidéo et au moins un port de communication optique, de préférence infrarouge, configuré pour recevoir au moins une instruction depuis au moins une télécommande différente du dispositif électronique et du dispositif de commande, le dispositif électronique étant configuré pour piloter le dispositif d'affichage au travers de l'envoi d'au moins un signal optique comprenant au moins une instruction vers ledit port de communication optique. Cela permet de piloter le téléviseur directement par son port infrarouge. Le téléviseur reçoit ainsi des signaux infrarouges de pilotage correspondant à ceux d'une télécommande mais provenant du dispositif électronique.
- Avantageusement, la présente invention comprend une pluralité de dispositifs de commande distincts les uns des autres, physiquement séparés et configurés pour émettre d'uniques données de commande différentes les unes des autres vers le dispositif électronique. Cela permet de disposer d'une pluralité de dispositif de commande, chaque dispositif de commande pouvant par exemple être attribué à un contact particulier parmi les proches du résident.
- Avantageusement, le dispositif électronique est destiné à être en communication avec au moins un module de capture audio et/ou un module de capture vidéo. Cela permet de connecter un microphone et/ou une caméra au dispositif électronique de sorte à permettre une communication audio et/ou visuelle entre le résident et ses proches.
- Avantageusement, le dispositif électronique comprend au moins un processeur, au moins une mémoire non transitoire stockant un produit programme d'ordinateur comportant des instructions exécutables par ledit au moins un processeur, lesdites instructions étant configurées pour exécuter en partie au moins le procédé selon la présente invention.

De manière générale, la présente invention a pour domaine d'application la mise en communication entre une personne nécessitant une assistance, que cette assistance soit motrice ou mentale ou quelconque, et ses proches. Ainsi, quand bien même par la suite de la description, nous nous réfèrerons principalement aux personnes âgées, cela ne sera qu'à titre d'exemple et aucunement limitatif. Par exemple la présente invention pourrait trouver une application dans les garderies pour enfants comme dans des instituts spécialisés pour certains troubles mentaux.

La présente invention trouve pour domaine préférentiel d'application la mise en communication entre un résident de maison de retraite, de préférence d'Etablissement d'Hébergement pour Personnes Agées Dépendantes (EHPAD), et ses proches.

En effet, de nombreuses personnes âgées se retrouvent coupées de leurs proches lorsqu'elles intègrent ce type d'établissement, car aujourd'hui où la communication est plus facile que jamais, cette technologie échappe aux personnes âgées.

Comme cela sera décrit par la suite, la présente invention se propose d'apporter une solution fiable, simple et ergonomique pour permettre une mise en relation entre personnes âgées et leurs proches dans le sens très vaste du terme.

De manière simple, les personnes âgées peuvent, au moyen de la présente invention, recevoir des photos, des messages textes et des appels audio et/ou vidéo directement sur leur écran de télévision sans plus de difficulté que d'appuyer sur un unique bouton.

En effet, de manière très astucieuse, la présente invention permet aux proches l'envoi de photo ou de message texte et même d'appels vers leurs parents, grands-parents ou arrières grands-parents placés en maison de repos, de retraite ou EHPAD. Cette communication peut être établie au moyen d'un terminal mobile de type smartphone par exemple mais également depuis un ordinateur. Cette communication sera alors reçue par le résident sur un écran comme par exemple sa télévision.

On notera qu'un espace de vie peut par exemple être une chambre ou une pièce d'un bâtiment.

Ainsi la présente invention est configurée pour pouvoir être implémentée dans la chambre d'un résident qui comprendrait une télévision et une connexion à l'Internet par exemple ou plus généralement à un réseau de communication de type réseau de communication étendu appelé « Wide Area Network » en anglais.

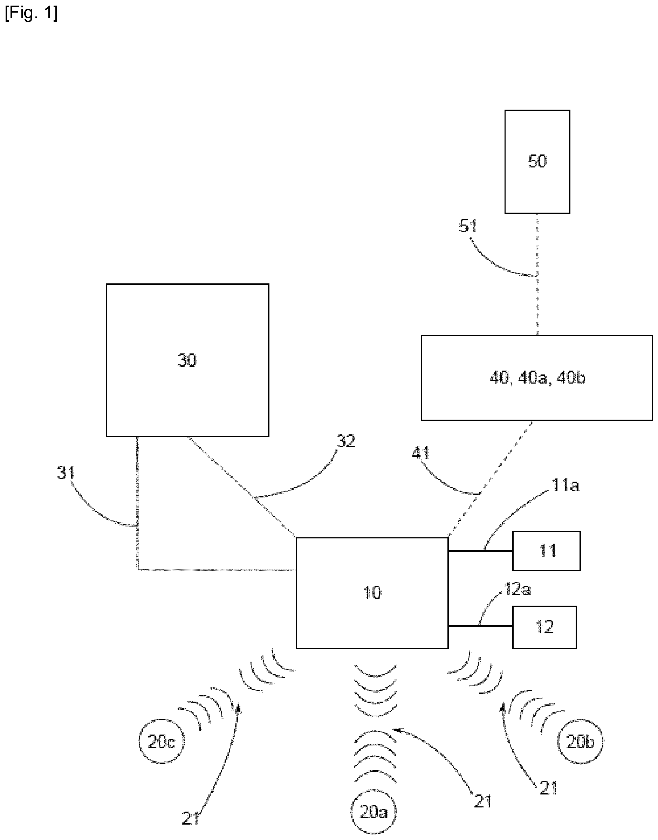

Nous allons à présent décrire selon un mode de réalisation la présente invention au travers des figures 1 à 3.

La figure 1 représente schématiquement un système selon un mode de réalisation de la présente invention.

Le système d'affichage d'une donnée de communication selon la présente invention comprend au moins :
- Un dispositif électronique 10
- Avantageusement, un module de capture audio 11 et/ou un module de capture vidéo 12
- Un dispositif d'affichage 30
- Un dispositif de commande 20
- De préférence, un serveur informatique 40, 40a, 40b
- De préférence, un terminal utilisateur 50

Selon un mode de réalisation, le dispositif électronique 10 comprend au moins un microprocesseur, au moins un module de stockage non transitoire comprenant au moins une série d'instructions destinée à être mise en oeuvre par ledit microprocesseur.

Avantageusement, ce dispositif électronique 10 peut être installé dans un dispositif d'affichage 30, dans une télévision par exemple, ou peut être installé dans une boîte située par exemple à proximité du dispositif d'affichage 30. Par exemple, le dispositif électronique 10 peut être disposé dans une boîte située à proximité de la télévision 30 du résident 60 directement dans sa chambre.

De manière préférée, le dispositif électronique 10 est relié à un réseau de communication de type Internet par exemple. Cette communication 41 peut être filaire et/ou non filaire. Le dispositif électronique 10 comprend avantageusement un module de communication destiné à permettre la communication entre le dispositif électronique 10 et au moins une pluralité d'autres dispositifs pris parmi au moins le dispositif d'affichage 30, le dispositif de commande 20, le serveur informatique 40, 40a, 40b.

Le dispositif électronique 10 est de préférence relié par une connexion filaire 31 au dispositif d'affichage 30, par exemple au moyen d'une connexion vidéo de type HDMI (de l'anglais « High-Définition MultiMedia Interface ») par exemple. Cette connexion 31 permet alors au dispositif électronique 10 d'envoyer des données de communication au dispositif d'affichage 30 afin que celles-ci soient affichées par le dispositif d'affichage 30.

Avantageusement, cette connexion 31 peut également permettre l'envoi d'instructions de pilotage du dispositif d'affichage 30, comme par exemple des instructions de basculement entre plusieurs sources vidéos, ou encore des instructions de contrôle du son à titre non limitatif.

Selon un mode de réalisation, le dispositif électronique 10 est en communication optique 32 avec le dispositif d'affichage 30. Par exemple, le dispositif électronique 10 peut comprendre un module infrarouge destiné à transmettre des instructions de pilotage depuis le dispositif électronique 10 vers le dispositif d'affichage 30, en particulier vers le récepteur infrarouge du dispositif d'affichage 30. De manière avantageuse, cela permet d'utiliser la présente invention avec une télévision 30 ne comprenant pas un port de pilotage électrique tel qu'un port HDMI par exemple. En effet, sur les anciennes télévisions 30, l'entrée audio/vidéo est généralement une prise péritel ne permettant pas de recevoir des instructions de pilotages par exemple. Aussi, l'utilisation d'une communication infrarouge depuis le dispositif électronique 10 vers le téléviseur 30 permet de piloter le téléviseur depuis le dispositif électronique comme si le téléviseur 30 été piloté par une télécommande.

Plus généralement, le dispositif électronique 10 peut être en communication 31, 32 avec le dispositif d'affichage 30 au travers de tout type de communications permettant le transfert de données de communication et/ou d'instructions de pilotage.

Le dispositif électronique 10 comprend également une connexion non filaire 21 avec au moins un dispositif de commande 20 et de préférence avec une pluralité de dispositifs de commande 20a, 20b, 20c. Cette connexion non filaire 21 permet ainsi au dispositif électronique 10 de transmettre au dispositif de commande 20 au moins une notification, par exemple d'arrivée d'au moins une nouvelle donnée de communication.

Cette connexion non filaire 21 permet également la transmission depuis le dispositif de commande 20 vers le dispositif électronique 10 d'au moins une donnée de commande. En effet, comme décrit par la suite, le résident 60 peut envoyer une donnée de commande vers le dispositif électronique 10 en actionnant l'unique bouton de commande que comprend le dispositif de commande 20.

Avantageusement, le dispositif électronique 10 est en communication 11a, 12a filaire et/ou non filaire avec au moins un module de capture audio 11 et/ou un module de capture vidéo 12. Par exemple, le dispositif électronique 10 peut être connecté à un microphone 11 et/ou à une caméra 12.

Selon un mode de réalisation, le module de capture vidéo 12 peut comprendre le module de capture audio 11. De préférence, la caméra 12 peut être connectée par une connexion filaire de type USB au dispositif électronique 10.

Selon un autre mode de réalisation, la caméra 12 peut être une caméra sans fil connecté au moyen d'une connexion 12a non filaire, de type radio fréquence par exemple, avec le dispositif électronique 10.

Selon un mode de réalisation, le microphone 11 peut être connecté au dispositif électronique 10 de manière non filaire de sorte à permettre au résident 60 de porter sur lui ou d'avoir à proximité de sa position le microphone 11.

Selon un mode de réalisation, le dispositif électronique 10 comprend au moins :
- Un module de stockage non transitoire ;
- Un module de communication avec au moins un réseau de communication de type Internet ;
- Un module de communication non filaire configuré pour communiquer avec au moins un dispositif de commande 20, 20a, 20b, 20c ;
- Un module de pilotage du dispositif d'affichage 30 comprenant un sous-module de communication optique, de préférence infrarouge ;
- Un module d'émission vidéo configuré pour transmettre au moins une donnée de communication vers le dispositif d'affichage 30 pour afficher ladite donnée de communication.

Selon un mode de réalisation, le dispositif électronique 10 est configuré pour au moins l'une parmi les fonctions et actions suivantes, de préférence pour l'ensemble des fonctions et actions suivantes :
- Etre en communication avec au moins un serveur informatique 40, 40a, 40b au travers d'au moins un réseau de communication, par exemple l'Internet ;
- Recevoir au moins une donnée de communication depuis au moins un serveur informatique 40, 40a, 40b ;
- Recevoir au moins une notification depuis au moins un serveur informatique 40, 40a, 40b ;
- Envoyer au moins un flux de données audio et/ou vidéo vers au moins un serveur informatique 40, 40a, 40b ;
- Etre en communication filaire et/ou non filaire avec le module de capture audio 11 et/ou le module de capture vidéo 12 ;
- Envoyer au moins une instruction d'activation du module de capteur audio 11 et/ou du module de capture vidéo 12 ;
- Recevoir au moins un flux de données audio et/ou vidéo depuis respectivement le module de capture audio 11 et/ou le module de capture vidéo 12 ;
- Etre en communication filaire et/ou non filaire avec le dispositif d'affichage 30 ;
- Envoyer vers le dispositif d'affichage 30 au moins une instruction de basculement depuis une première source vidéo vers une deuxième source vidéo;
- Envoyer au moins une instruction d'affichage d'au moins une donnée de communication vers dispositif d'affichage 30 ;
- Envoyer au moins une donnée de communication vers le dispositif d'affichage 30 ;
- Envoyer au moins une instruction d'affichage d'au moins un flux de données audio et/ou vidéo au dispositif d'affichage 30 ;
- Envoyer vers le dispositif d'affichage 30 au moins une instruction de basculement depuis une deuxième source vidéo vers une première source vidéo ;
- Envoyer au moins une instruction de commande vers le dispositif d'affichage 30 ;
- Etre en communication non filaire avec au moins un dispositif de commande 20, de préférence avec une pluralité de dispositifs de commande 20a, 20b, 20c ;
- Envoyer au moins une notification vers le dispositif de commande 20, de préférence vers au moins un dispositif de commande 20a, 20b, 20c de la pluralité de dispositifs de commande 20a, 20b, 20c ;
- Recevoir au moins une donnée de commande depuis le dispositif de commande 20, de préférence depuis au moins un dispositif de commande 20a, 20b, 20c de la pluralité de dispositifs de commande 20a, 20b, 20c.

Le dispositif de commande 20, selon un mode de réalisation, peut se présenter sous la forme d'un galet, d'un petit cylindre ou de toute autre forme ergonomique pour être tenue dans la main du résident 60.

Avantageusement, le dispositif de commande 20 présente une dimension d'extension principale inférieure ou égal à 10cm, de préférence à 5cm et avantageusement à 2cm.

Selon un mode de réalisation, le dispositif de commande 20 comprend :
- Un unique bouton de commande ;
- Au moins une source d'alimentation ;
- Au moins un module de communication non filaire, par exemple par liaison de type optique ou de préférence de type radiofréquence ;
- Au moins un module de génération de notifications.

Le dispositif de commande 20, selon un mode de réalisation, est configuré pour être d'une utilisation très simple. En effet, le dispositif de commande 20 ne comprend qu'un seul et unique bouton de commande. Ce bouton de commande peut par exemple être un bouton poussoir, ou bien un capteur tactile, ou encore tout type d'interrupteur permettant d'être actionné par le résident 60.

Avantageusement, l'unique bouton de commande est configuré pour ne pouvoir être qu'en deux états distincts, un état marche et un état arrêt. Ainsi, le fonctionnement de l'unique bouton est simple, il est de type binaire. L'unique bouton de commande est configuré pour être aisément actionné par le résident 60 en simplement touchant et/ou appuyant sur l'unique bouton de commande.

Selon un mode de réalisation, le module de génération de notification est configuré pour générer au moins une notification prise parmi :
- Une notification visuelle ;
- Une notification auditive ;
- Une notification tactile.

Une notification visuelle peut par exemple correspondre à la génération d'une lumière par le module de génération de notification, au moyen par exemple d'une source lumineuse comme une ou plusieurs diodes électroluminescentes.

Selon un mode de réalisation, cette lumière peut présenter une couleur liée à un certain type de notifications. Par exemple, dans le cas d'une notification d'un nouveau message texte, la lumière pourrait être d'une première couleur. Dans le cas d'une notification d'une nouvelle photo, la lumière pourrait être d'une deuxième couleur, et dans le cas d'une notification d'un appel audio et/ou vidéo, la lumière pourrait être d'une troisième couleur, la première couleur, la deuxième couleur et la troisième couleur étant différentes les unes des autres par exemple.

De nombreuses variantes sont envisageables dans lesquelles, la lumière présente une dynamique, par exemple le dispositif de commande 20 pourrait clignoter pour signaler un appel en absence ou bien que des messages textes, audio et/ou vidéo ou des photos sont à visionner.

De même, il est possible d'attribuer une animation lumineuse ainsi qu'une ou plusieurs couleurs à chaque contact enregistré afin de permettre une identification visuelle des appelants par le résident 60.

Cette pluralité et cette dynamique de notification lumineuses s'appliquent également au cas de notifications sonores ou tactiles.

En effet, selon un mode de réalisation, le dispositif de commande 20 peut vibrer à la réception d'une notification, et par exemple selon une animation particulière à l'image de la notification lumineuse.

Selon un autre mode de réalisation, la notification peur être sonore et ainsi un son peut être attribué à chaque type de notifications et/ou contacts.

Selon un mode de réalisation, le résident 60 peut en appuyant sur ou en touchant l'unique bouton de commande transmettre une donnée de commande d'appel d'un ou de plusieurs contacts préenregistrés.

Par exemple, une pression simple sur l'unique bouton de commande permet d'envoyer une demande d'appel audio et/ou vidéo à un premier contact, tandis que deux pressions répétées correspondent à un deuxième contact, et ainsi de suite.

Selon un autre mode de réalisation, des séquences de pression peuvent être préenregistrées afin de réaliser diverses actions avec le dispositif de commande 20 et de piloter de manière simple le dispositif électronique 10.

Selon encore un autre mode de réalisation, le système comprend une pluralité de dispositifs de commande 20. Cela permet par exemple de disposer des dispositifs de commande 20 dans plusieurs endroits de la pièce ou de la zone de vie du résident 60 de sorte à lui permettre d'utiliser aisément et sans devoir beaucoup se déplacer le présent système d'affichage.

Cela permet également par exemple d'attribuer un dispositif de commande 20 à chaque contact préenregistré au niveau du système de sorte à permettre au résident 60 de contacter facilement la personne qu'il souhaite parmi ces contacts préenregistrés. De manière avantageuse, une illustration ou une photo des contacts peut être associée à chaque dispositif de commande 20, 20a, 20b, 20c. Ainsi, le visage du fils d'un résident 60 peut être affiché sur un dispositif de commande 20 de sorte que l'actionnement de l'unique bouton de ce dispositif de commande 20 en particulier permet l'envoie d'une donnée de commande vers le dispositif électronique 10 configurée pour établir une communication entre le résident 60 et son fils.

Selon un mode de réalisation, le dispositif de commande 20 est configuré pour au moins l'une parmi les fonctions et actions suivantes, de préférence pour l'ensemble des fonctions et actions suivantes :
- Etre en communication non filaire au moins un dispositif électronique 10 tel que décrit précédemment ;
- Recevoir au moins une notification depuis le dispositif électronique 10 ;
- Générer au moins une notification prise parmi au moins : une notification visuelle, auditive ou encore tactile.
- Envoyer au moins une donnée de commande vers le dispositif électronique 10 ;
- Etre actionné par actionnement de l'unique bouton de commande par le résident, par exemple par un doigt du résident 60.

Selon un mode de réalisation, le dispositif d'affichage 30 comprend un écran de type télévision par exemple. Le dispositif d'affichage 30 est configuré pour au moins l'une parmi les fonctions et actions suivantes, de préférence pour l'ensemble des fonctions et actions suivantes :
- Afficher au moins une donnée de communication ;
- Etre en communication avec le dispositif électronique 10 de manière filaire et/ou non filaire ;
- Recevoir au moins une donnée de communication depuis le dispositif électronique 10, de préférence au moyen d'une connexion filaire 31 ;
- Recevoir au moins une instruction de commande depuis le dispositif électronique 10, de préférence au moyen d'une connexion non filaire 32, par exemple optique, de préférence infrarouge.

Selon un mode de réalisation, le dispositif d'affichage est un téléviseur, également appelé télévision. Cela est avantageux, car la présente invention peut directement être implémentée sans difficulté dans l'espace de vie d'un résident. En effet, la présente invention est configurée pour être connectée à une télévision et à un réseau de communication de type Internet. Ainsi, la présente invention peut être implémentée simplement dans tout espace de vie comprenant une télévision et une connexion à l'Internet ou à un autre réseau de communication en communication avec au moins un serveur informatique.

Selon un mode de réalisation, le serveur informatique 40, 40a, 40b peut comprendre ou être en communication avec :
- Au moins un portail informatique 40a ;
- Au moins une plateforme informatique 40b.

Le serveur informatique 40, 40a, 40b est en communication filaire et/ou non filaire avec au moins un terminal utilisateur 50 et/ou avec le dispositif électronique 10.

Selon un mode de réalisation, le portail informatique 40a peut être une application hébergée par un serveur informatique, couramment appelée application web par exemple. Selon un autre mode de réalisation, le portail informatique peut être une application mobile installée totalement ou partiellement sur le terminal utilisateur 50 par exemple.

Selon un mode de réalisation, la plateforme informatique 40b peut être une application hébergée par un serveur informatique.

De préférence, le serveur informatique 40, 40a, 40b est dit distant relativement au dispositif électronique 10, c'est-à-dire que le serveur informatique 40, 40a, 40b peut être localisé dans une autre pièce, une autre ville, un autre pays que celui où se trouve le dispositif électronique 10.

Selon un mode de réalisation, le serveur informatique 40, 40a, 40b est configuré pour au moins l'une parmi les fonctions et actions suivantes, de préférence pour l'ensemble des fonctions et actions suivantes :
- Etre en communication filaire et/ou non filaire avec au moins un portail informatique 40a ;
- Recevoir au moins une donnée de communication depuis le portail informatique 40a ;
- Envoyer au moins une notification de réception d'une nouvelle donnée de communication vers le portail informatique 40a ;
- Recevoir au moins une instruction d'interruption depuis le portail informatique 40a ;
- Etre en communication filaire et/ou non filaire avec au moins une plateforme informatique 40b ;
- Recevoir au moins une demande de mise en communication depuis la plateforme informatique 40b ;
- Envoyer au moins une instruction de fermeture d'au moins un canal de communication vers la plateforme informatique 40b ;
- Etre en communication filaire et/ou non filaire avec au moins un dispositif électronique 10 ;
- Envoyer au moins une donnée de communication vers le dispositif électronique 10 ;
- Envoyer au moins une notification vers le dispositif électronique 10 ;
- Envoyer au moins une notification d'interruption vers le dispositif électronique 10 ;

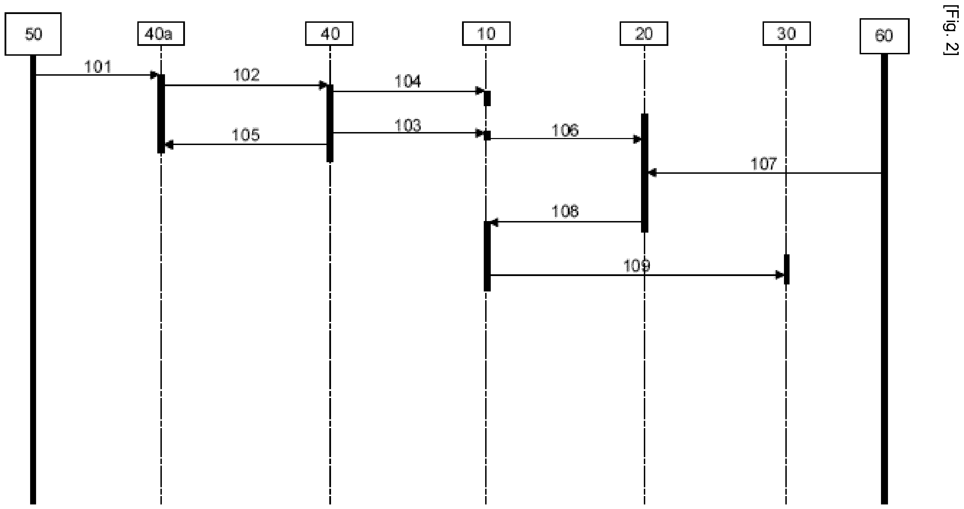

La figure 2 représente un procédé d'affichage d'au moins une donnée de communication sur le dispositif d'affichage 30 d'une résidente 60, par exemple une arrière-grand-mère 60. Cette donnée de communication pouvant provenir d'un terminal utilisateur 50 d'un proche, par exemple du smartphone 50 de son arrière-petite-fille.

Une donnée de communication peut par exemple et de manière non limitative, être un texte, une photo, un enregistrement vidéo et/ou sonore et enfin un appel audio et/ou vidéo.

Selon la figure 2, et le mode de réalisation qui y est représenté, l'arrière-petite-fille transmet une donnée de communication, une photo par exemple, à son arrière-grand-mère 60.

En effet, la présente invention permet d'afficher sur la télévision 30 de l'arrière-grand-mère 60 par exemple une photo que son arrière-petite-fille lui a envoyée depuis son smartphone 50.

Comme décrit par la suite, la photo prise par le smartphone 50 de l'arrière-petite-fille, est envoyée vers au moins un portail informatique 40a. Puis, depuis le portail informatique 40a, la photo est envoyée vers au moins un serveur informatique 40. Puis, depuis le serveur informatique 40, la photo est envoyée vers le dispositif électronique 10.

De préférence, à la réception par le dispositif électronique 10, la photo est enregistrée dans au moins un module de stockage. Puis, avantageusement la photo est intégrée dans au moins une animation comprenant par exemple une ou plusieurs autres photos ou messages textes.

De préférence, le serveur informatique 40 transmet une notification de nouveau message au dispositif électronique 10.

Avantageusement, le dispositif électronique 10 transmet au dispositif de commande 20 une notification. A la réception de cette notification, le dispositif de commande 20 peut par exemple vibrer ou encore émettre une lumière. Cette lumière peut être caractéristique de la réception d'une photo et/ou d'une donnée de communication de l'arrière-petite-fille.

De manière avantageuse, le dispositif de commande 20 peut être porté par le résident 60, ainsi il peut s'agir d'une broche, d'un badge, d'un pendentif voir d'un bracelet.

Ainsi, lorsque l'arrière-grand-mère 60 voit par exemple son badge s'allumer ou encore vibrer, elle appuie ou simplement touche l'unique bouton de commande du dispositif de commande 20.

Lorsque l'unique bouton de commande est actionné, le dispositif de commande 20 envoie une donnée de commande vers le dispositif électronique 10, qui alors envoie la photo vers le dispositif d'affichage 30 et de préférence pilote le dispositif d'affichage 30 afin que celui-ci affiche la photo. L'arrière-grand-mère 60 peut ainsi voir la photo que son arrière-petite-fille lui a envoyée.

Ainsi selon un mode de réalisation de la présente invention, le procédé d'affichage d'au moins une donnée de communication comprend au moins certaines et de préférence toutes les étapes suivantes. Il peut également comprendre des tapes additionnelles :
- Envoi 101 depuis le terminal utilisateur 50 d'au moins une première donnée de communication vers au moins un serveur informatique 40, 40a, 40b, de préférence vers un portail informatique 40a hébergé dans au moins un premier serveur informatique 40 ;
- Réception par le portail informatique 40a d'au moins ladite donnée de communication depuis le terminal utilisateur 50 ;
- Envoi 102 depuis le portail informatique 40a de la première donnée de communication vers au moins un serveur informatique 40, 40b ;
- Réception par ledit serveur informatique 40, 40b de la première donnée de communication depuis le portail informatique 40a ;
- De préférence, envoi depuis ledit serveur informatique 40, 40b d'au moins une notification d'une nouvelle donnée de communication vers le dispositif électronique 10 ;
- Réception 104 par le dispositif électronique 10 de la notification d'une nouvelle donnée de communication depuis ledit serveur informatique 40, 40b ;
- Envoi depuis ledit serveur informatique 40, 40b de la première donnée de communication vers le dispositif électronique 10 ;
- Réception 103 par le dispositif électronique 10 de la première donnée de communication depuis ledit serveur informatique 40, 40b ;
- Stockage de la première donnée de communication dans au moins un module de stockage du dispositif électronique 10 ;
- De préférence, ajout de ladite donnée de communication dans une animation visuelle étant affichée par le dispositif d'affichage 30 et comprenant une pluralité de données de communication;
- Envoi 105 depuis ledit serveur informatique 40, 40b d'une notification de réception d'une nouvelle donnée de communication vers le portail informatique 40a ;
- Réception par le portail informatique 40a de la notification de réception d'une nouvelle donnée de communication depuis le serveur informatique 40, 40b ;
- Envoi 106 depuis le dispositif électronique 10 d'une notification vers le dispositif de commande 20 ;
- Réception par le dispositif de commande 20 de la notification depuis le dispositif électronique 10 ;
- Génération d'au moins une notification par le dispositif de commande 20 ;
- Actionnement 107 par le résident 60, de préférence par le doigt du résident 60, de l'unique bouton de commande du dispositif de commande 20 ;
- Envoi depuis le dispositif de commande 20 d'une donnée de commande vers le dispositif électronique 30 ;
- Réception 108 par le dispositif électronique 10 de la donnée de commande depuis le dispositif de commande 20 ;
- Envoi 109 depuis le dispositif électronique 10 de la première donnée de communication vers le dispositif d'affichage 30 et envoi d'au moins une instruction de basculement depuis une première source vidéo vers une deuxième source vidéo vers le dispositif d'affichage 30, et de préférence envoie depuis le dispositif électronique 10 d'au moins une instruction d'affichage de la donnée de communication vers le dispositif d'affichage 30.
- Réception par le dispositif d'affichage 30 de l'instruction de basculement depuis le dispositif électronique 10 ;
- Basculement par le dispositif d'affichage 30 de la première source vidéo vers la deuxième source vidéo ;
- Réception par le dispositif d'affichage 30 de la donnée de communication depuis le dispositif électronique 10, de préférence au travers de la deuxième source vidéo ;
- Affichage par le dispositif d'affichage 30 de ladite donnée de communication.

Selon un mode de réalisation, le serveur informatique 40, 40a, 40b peut être à l'écoute de certains réseaux sociaux de l'Internet de sorte à ce que lorsqu'un mot clef préenregistré est détecté dans un ou plusieurs réseaux sociaux, le message associé à ce mot clef soit transmis directement vers le dispositif électronique 10 sous la forme d'une donnée de communication. Cela permet par exemple à un proche de poster une photo sur un réseau social en y attribuant un mot clef, et ainsi automatiquement le résident 60 peut recevoir cette photo sur sa télévision 30.

La présente invention permet de manière simple à un résident 60 de maison de retraite par exemple de visualiser des photos, des messages textes et autres envoyés de ses proches directement sur sa télévision 30.

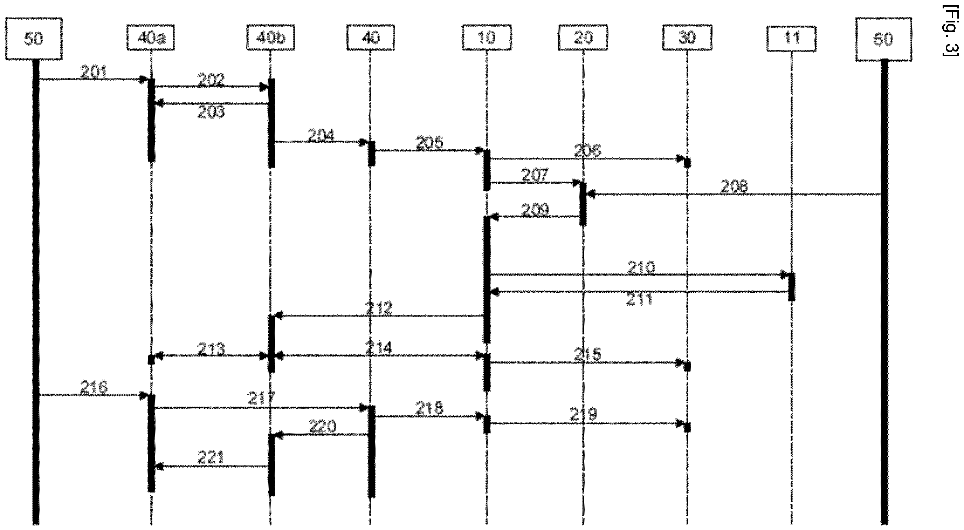

Selon un mode de réalisation, la figure 3 représente un procédé d'affichage d'au moins une donnée de communication sur le dispositif d'affichage 30 d'un résident 60. Selon ce mode de réalisation, la donnée de communication est un flux de données audio et/ou vidéo. En effet, la figure 3 représente schématiquement un procédé de mise en place d'une communication audio et/ou visuelle entre un résident 60 tel qu'un grand-père avec par exemple son petit-fils.

Selon la figure 3, et le mode de réalisation qui y est représenté, le petit fils appelle son grand-père 60 depuis par exemple son ordinateur 50 afin de réalisation une visioconférence avec son grand-père 60.

En effet, la présente invention permet la mise en relation audiovisuelle au travers de la télévision 30 du grand-père 60 entre celui-ci et son petit-fils.

Comme décrit par la suite, la demande de mise en relation du petit-fils est envoyée vers au moins un portail informatique 40a. Puis, depuis le portail informatique 40a, cette demande de mise en relation est envoyée vers au moins une plateforme informatique 40b. La plateforme informatique 40b est configurée pour créer alors au moins un canal de communication destiné à permettre le transit de flux de données audio et/ou vidéo entre le grand-père 60 et son petit-fils.

Puis, de préférence une fois le canal de communication créé, la plateforme informatique 40b envoie la demande de mise en communication à au moins un serveur informatique 40. Ce serveur informatique 40 transmet alors cette demande de mise en communication au dispositif électronique 10.

Une fois reçue, le dispositif électronique 10 envoie une notification au dispositif de commande 20 ainsi qu'au moins une instruction à la télévision 30 afin de préparer la visioconférence.

Une fois que le grand-père 60 actionne l'unique bouton de commande, par exemple en appuyant dessus ou simplement en le touchant, le dispositif électronique 10 envoie au moins une instruction d'activation d'un micro 11 et/ou d'une caméra 12. Ledit ou lesdits modules transmettent alors un ou plusieurs flux de données vers le dispositif électronique 10 qui le ou les transmet à la plateforme informatique 40b. Celle-ci le ou les transmet alors vers l'ordinateur 50 du petit-fils au travers par exemple du portail informatique 40a. Ainsi, le petit fils peut entendre et/ou voir son grand-père 60, et son grand-père 60 peut également l'entendre et/ou le voir via le microphone et/ou la caméra de l'ordinateur 50 du petit fils.

Selon un mode de réalisation, le grand-père 60 peut également déclencher l'appel vers son petit-fils, par exemple en appuyant ou en touchant l'unique bouton de commande d'un dispositif de commande 20 qui est soit préenregistré pour correspondre avec son petit-fils, soit au travers d'une séquence d'activation correspondant à son petit-fils. Ainsi cela permet au grand-père 60 de rentrer en communication audio et/ou visuelle avec son petit-fils, ou de manière plus générale avec tout proche préenregistré.

Selon un mode de réalisation, le système selon la présente invention comprend une pluralité de dispositifs de commande 20a, 20b, 20c, chaque dispositif correspondant à un contact préenregistré par exemple.

Enfin, afin de terminer la communication, le petit fils ou le grand-père 60 peuvent interrompre la communication. De préférence seul le petit fils peut l'interrompre afin que le résident 60 ne doive réaliser que le moins d'actions possibles, c'est-à-dire uniquement actionné le dispositif de commande 20 via l'unique bouton de commande.

Ainsi selon un autre mode de réalisation, le procédé d'affichage d'au moins une donnée de communication comprend au moins certaines et de préférence toutes les étapes suivantes. Il peut également comprendre des tapes additionnelles :
- Envoi 201 depuis un terminal utilisateur 50 d'au moins une demande de mise en communication vers un serveur informatique 40, 40a, 40b, de préférence vers un portail informatique 40a hébergé dans au moins un serveur informatique 40, 40b ;
- Envoi 202 depuis le portail informatique 40a de ladite demande de mise en communication vers une plateforme informatique 40b ;
- Création 203 au niveau de la plateforme informatique 40b d'une ligne de communication ;
- Envoi 204 depuis la plateforme informatique 40b d'une notification de création de ladite ligne de communication vers le serveur informatique 40 ;
- Envoi depuis le serveur informatique 40 de la demande de mise en communication vers le dispositif électronique 10 ;
- Réception 205 par le dispositif électronique 10 de la demande de mise en communication depuis le serveur informatique 40 ;
- Envoi 206 depuis le dispositif électronique 10 d'au moins une instruction de commande vers le dispositif d'affichage 30 configurée pour que le dispositif d'affichage 30 bascule depuis une première source vidéo vers une deuxième source vidéo ;
- Envoi 207 par le dispositif électronique 10 d'au moins une notification vers le dispositif de commande 20 ;
- Réception par le dispositif de commande 20 de ladite notification depuis le dispositif électronique 10 ;
- Génération par le dispositif de commande 20 d'au moins une notification prise parmi au moins une notification visuelle, auditive ou tactile ;
- Actionnement 208 par le résident 60 de l'unique bouton de commande du dispositif de commande 20 ;
- Envoi par le dispositif de commande 20 d'au moins une donnée de commande vers le dispositif électronique 10 ;
- Réception 209 par le dispositif électronique 10 de la donnée de commande depuis le dispositif de commande 20 ;
- Envoi 210 depuis le dispositif électronique 10 d'au moins une instruction d'activation du module de capture audio 11 et/ou du module de capture vidéo 12 respectivement vers le module de capture audio 11 et/ou vers le module de capture vidéo 12 ;
- Réception par le module de capture audio 11 et/ou le module de capture vidéo 12 de l'instruction d'activation depuis le dispositif électronique 10 ;
- Activation du module de capture audio 11 et/ou du module de capture vidéo 12 ;
- Envoi par le module de capture audio 11 et/ou par le module de capture vidéo 12 d'au moins un premier flux de données audio et/ou vidéo vers le dispositif électronique 10 ;
- Réception 211 par le dispositif électronique 10 d'au moins un premier flux de données audio et/ou vidéo depuis respectivement le module de capture audio 11 et/ou le module de capture vidéo 12 ;
- Envoi 212 depuis le dispositif électronique 10 du premier flux de données audio et/ou vidéo vers la plateforme informatique 40b ;
- Réception par la plateforme informatique 40b du premier flux de données audio et/ou vidéo depuis le dispositif électronique 10 ;
- Envoi depuis le terminal utilisateur 50 d'au moins un deuxième flux de données audio et/ou vidéo vers le portail informatique 40a ;
- Réception par le portail informatique 40a du deuxième flux de données audio et/ou vidéo ;
- Envoi 213 par la plateforme informatique 40b du premier flux de données audio et/ou vidéo vers le portail informatique 40a et envoi par le portail informatique 40a du deuxième flux de données audio et/ou vidéo vers la plateforme informatique 40b ;
- Réception par le portail informatique 40a du premier flux de données audio et/ou vidéo depuis la plateforme informatique 40b et réception par la plateforme informatique 40b du deuxième flux de donnée audio et/ou vidéo depuis le portail informatique 40a ;
- Envoi depuis le portail informatique 40a du premier flux de données audio et/ou vidéo vers le terminal utilisateur 50 et envoi 214 depuis la plateforme informatique 40b du deuxième flux de données audio et/ou vidéo vers le dispositif électronique 10 ;
- Réception par le terminal utilisateur 50 du premier flux de données audio et/ou vidéo depuis le portail informatique 40a et affichage sur le terminal utilisateur 50 du premier flux de données audio et/ou vidéo ;
- Réception par le dispositif électronique 10 du deuxième flux de données audio et/ou vidéo depuis la plateforme informatique 40b ;
- Envoi 215 par le dispositif électronique 10 du deuxième flux de données audio et/ou vidéo vers le dispositif d'affichage 30, et de préférence envoi depuis le dispositif électronique 10 d'une instruction d'affichage du deuxième flux de données audio et/ou vidéo vers le dispositif d'affichage 30 ;
- Puis affichage sur le dispositif d'affichage 30 du deuxième flux de données audio et/ou vidéo ;
- Puis émission et réception par la plateforme informatique 40b d'une pluralité de flux de données audio et/ou vidéo depuis et vers le portail informatique 40a et depuis et vers le dispositif électronique 10 de sorte à permettre une communication audio et/ou vidéo, de préférence en temps réel, entre un utilisateur du terminal utilisateur 50 et le résident 60.
- Lorsque l'utilisateur souhaite terminer la communication, l'utilisateur actionne son terminal utilisateur 50 et celui-ci envoie 216 au moins une instruction d'interruption vers le portail informatique ;
- Réception par le portail informatique 40a de l'instruction d'interruption depuis le terminal utilisateur 50 ;
- Envoi 217 par le portail informatique 40a de l'instruction d'interruption vers le serveur informatique 40 ;
- Réception par le serveur informatique 40 de l'instruction d'interruption depuis le portail informatique 40a ;
- Envoi par le serveur informatique 40 d'au moins une notification d'interruption vers le dispositif électronique 10 ;
- Réception 218 par le dispositif électronique 10 de la notification d'interruption depuis le serveur informatique 40, et envoi 219 depuis le dispositif électronique 10 vers le dispositif d'affichage 30 d'une instruction de basculement depuis la deuxième source vidéo vers la première source vidéo ;
- Envoi 220 depuis le serveur informatique 40 d'au moins une instruction de fermeture du canal de communication vers la plateforme informatique 40b ;
- Réception par la plateforme informatique 40b de l'instruction de fermeture du canal de communication depuis le serveur informatique 40 ;
- Fermeture par la plateforme informatique 40b du canal de communication ;
- Envoi 221 depuis la plateforme informatique 40b d'au moins une confirmation d'interruption vers le portail informatique 40a ;
- Réception par le portail informatique 40a de la confirmation d'interruption depuis la plateforme informatique 40b ;
- Envoi de la confirmation d'interruption depuis le portail informatique 40a vers le terminal utilisateur 50 ;
- Réception par le terminal utilisateur 50 de la confirmation d'interruption depuis le portail informatique 40a.

Ainsi, la présente invention permet d'établir une communication audio et/ou vidéo entre un résident et ses proches et cela de manière simple et fiable. Le résident n'a qu'à activer son dispositif de commande. A partir de là, la communication s'établit et lorsqu'elle se termine, la télévision du résident bascule automatiquement vers la source vidéo utilisée par exemple avant la communication.

Bien qu'il soit décrit dans la présente description un ou plusieurs modes de réalisation préférés de l'invention, il doit être bien compris que l'invention n'est pas limitée à ce ou ces modes, et que des variations peuvent être apportées à l'intérieur de la portée des revendications suivantes.

### REFERENCES

10. Dispositif électronique
11. Module de capture audio
11a. Connexion entre le dispositif électronique et le module de capture audio
12. Module de capture vidéo
12a. Connexion entre le dispositif électronique et le module de capture vidéo
20. Dispositif de commande
20a. Premier dispositif de commande
20b. Deuxième dispositif de commande
20c. Troisième dispositif de commande
21. Communication sans fil
30. Dispositif d'affichage
31. Communication électrique
32. Communication infrarouge
40. Serveur informatique
41. Communication informatique entre le dispositif électronique et le serveur informatique
40a. Portail informatique
40b. Plateforme informatique
50. Terminal utilisateur
51. Communication informatique entre le terminal utilisateur et le serveur informatique
60. Résident
101. Envoi depuis le terminal utilisateur d'une première donnée de communication vers le portail informatique
102. Envoi depuis le portail informatique de la première donnée de communication vers le serveur informatique
103. Réception par le dispositif électronique de la première donnée de communication depuis le serveur informatique
104. Réception par le dispositif électronique d'une notification d'une nouvelle donnée de communication depuis le serveur informatique
105. Envoi par le serveur informatique d'une notification de réception d'une nouvelle donnée de communication vers le portail informatique
106. Envoi par le dispositif électronique d'une notification vers le dispositif de commande
107. Actionnement de l'unique bouton de commande du dispositif de commande par le résident, puis envoi d'au moins une donnée de commande par le dispositif de commande vers le dispositif électronique
108. Réception par le dispositif électronique d'une donnée de commande depuis le dispositif de commande
109. Envoi depuis le dispositif électronique de la première donnée de communication vers le dispositif d'affichage et envoi d'au moins une instruction de basculement depuis une première source vidéo vers une deuxième source vidéo vers le dispositif d'affichage, et de préférence envoi depuis le dispositif électronique d'au moins une instruction d'affichage de la donnée de communication vers le dispositif d'affichage
201. Envoi depuis un terminal utilisateur d'au moins une demande de mise en communication vers le portail informatique
202. Envoi depuis le portail informatique de la demande de mise en communication vers une plateforme informatique
203. Création au niveau de la plateforme informatique d'au moins un canal de communication
204. Envoi depuis la plateforme informatique de la demande de mise en communication vers le serveur informatique
205. Réception par le dispositif électronique de la demande de mise en communication depuis le serveur informatique
206. Envoi par le dispositif électronique d'au moins une instruction de basculement depuis une première source vidéo vers une deuxième source vidéo vers le dispositif d'affichage
207. Envoi depuis le dispositif électronique d'une notification vers le dispositif de commande
208. Actionnement de l'unique bouton de commande du dispositif de commande par le résident, puis envoi d'au moins une donnée de commande par le dispositif de commande vers le dispositif électronique
209. Réception par le dispositif électronique d'une donnée de commande depuis le dispositif de commande
210. Envoi depuis le dispositif électronique d'une instruction d'activation du module de capture audio et/ou du module de capteur vidéo respectivement vers le module de capture audio et/ou du module de capteur vidéo
211. Réception par le dispositif électronique d'au moins un premier flux de données audio et/ou vidéo respectivement depuis le module de capture audio et/ou du module de capteur vidéo
212. Envoi depuis le dispositif électronique du premier flux de données audio et/ou vidéo vers la plateforme informatique
213. Envoi depuis la plateforme informatique du premier flux de données audio et/ou vidéo vers le portail informatique et envoi depuis le portail informatique d'un deuxième flux de données audio et/ou vidéo vers la plateforme informatique
214. Envoi depuis la plateforme informatique du deuxième flux de données audio et/ou vidéo vers le dispositif électronique et envoi depuis le dispositif électronique du premier flux de données audio et/ou vidéo vers la plateforme informatique
215. Envoi depuis le dispositif électronique du deuxième flux de données audio et/ou vidéo vers le dispositif d'affichage, et de préférence envoi depuis le dispositif électronique d'une instruction d'affichage du deuxième flux de données audio et/ou vidéo vers le dispositif d'affichage
216. Envoi depuis le terminal utilisateur d'une instruction d'interruption vers le portail informatique
217. Envoi depuis le portail informatique de l'instruction d'interruption vers le serveur informatique
218. Réception par le dispositif électronique d'une notification d'interruption depuis le serveur informatique
219. Envoi depuis le dispositif électronique d'une instruction de commande de basculement depuis la deuxième source vidéo vers la première source vidéo vers le dispositif d'affichage
220. Envoi depuis le serveur informatique d'une instruction de fermeture du canal de communication vers la plateforme informatique
221. Envoi depuis la plateforme informatique d'une confirmation d'interruption vers le portail informatique

## Revendications

1. Procédé d'affichage d'au moins une donnée de communication sur au moins un dispositif d'affichage (30), tel qu'un téléviseur, disposé dans un espace de vie d'au moins un résident, ladite donnée de communication étant prise parmi au moins : un texte, une image, un flux de données audio et/ou vidéo, une demande d'appel audio et/ou vidéo, un enregistrement audio et/ou vidéo, ledit procédé d'affichage comprenant au moins les étapes suivantes :
• Réception (103, 205) par un dispositif électronique (10), situé dans ledit espace de vie, d'au moins une première donnée de communication depuis au moins un serveur informatique (40, 40a, 40b) en communication avec le dispositif électronique (10) au travers au moins d'un réseau de communication ;
• Envoi (106, 206) par le dispositif électronique (10) d'au moins une notification à au moins un dispositif de commande (20, 20a, 20b, 20c) comprenant un unique bouton de commande ;
• Réception de ladite notification par ledit dispositif de commande (20, 20a, 20b, 20c) ;
• Puis, génération par ledit dispositif de commande (20, 20a, 20b, 20c) d'au moins une notification à destination dudit résident, ladite notification étant prise parmi au moins : une notification visuelle, une notification auditive, une notification tactile ;
• En réponse à ladite notification, actionnement (107, 208) de l'unique bouton de commande du dispositif de commande (20, 20a, 20b, 20c) par au moins un doigt du résident, et
• en réponse audit actionnement, envoi par le dispositif de commande (20, 20a, 20b, 20c) d'une donnée de commande vers le dispositif électronique (10) au travers d'une communication non filaire ;
• Réception (108, 209) par le dispositif électronique (10) de ladite donnée de commande depuis le dispositif de commande (20, 20a, 20b, 20c) ;
• Envoi (109, 215) depuis le dispositif électronique (10) de la première donnée de communication vers le dispositif d'affichage (30) ;
• Affichage par ledit dispositif d'affichage (30) de ladite première donnée de communication.

2. Procédé selon la revendication précédente comprenant, avant et/ou après la réception (108) de la donnée de commande par le dispositif électronique (10) depuis le dispositif de commande (20, 20a, 20b, 20c), au moins une étape d'envoi depuis le dispositif électronique (10) vers le dispositif d'affichage (30) d'au moins une instruction de basculement depuis une première source vidéo vers une deuxième source vidéo.

3. Procédé selon l'une quelconques des revendications précédentes comprenant, avant et/ou après l'étape l'envoi (106) par le dispositif électronique (10) de la notification au dispositif de commande (20, 20a, 20b, 20c), au moins une étape de stockage de la première donnée de communication dans au moins un module de stockage non transitoire dudit dispositif électronique (10).

4. Procédé selon l'une quelconque des revendications précédentes comprenant, après l'étape de réception (108) par le dispositif électronique (10) de la donnée de commande depuis ledit dispositif de commande (20, 20a, 20b, 20c), au moins les étapes suivantes :
• Envoi (212) par ledit dispositif électronique (10) vers au moins un serveur informatique (40, 40a, 40b) d'au moins un premier flux de données audio et/ou vidéo ;
• Réception par le dispositif électronique (10) d'au moins un deuxième flux de données audio et/ou vidéo depuis un serveur informatique (40, 40a, 40b), le deuxième flux de données audio et/ou vidéo provenant d'au moins un terminal utilisateur (50).

5. Procédé selon la revendication précédente comprenant, avant l'étape d'envoi (212) par ledit dispositif électronique (10) vers au moins un serveur informatique (40, 40a, 40b) d'au moins un premier flux de données audio et/ou vidéo, au moins les étapes suivantes :
• Envoi (210) depuis le dispositif électronique (10) d'au moins une instruction d'activation d'au moins un module de capture vers au moins un module de capture, le module de capture (11, 12) étant pris parmi au moins un module de capture audio (11) et/ou un module de capture vidéo (12) ;
• Réception par le module de capture (11, 12) de l'instruction d'activation depuis le dispositif électronique (10) ;
• Activation du module de capture (11, 12) ;
• Envoi par le module de capture (11, 12) du premier flux de données audio et/ou vidéo vers le dispositif électronique (10) ;
• Réception (211) par le dispositif électronique (10) du premier flux de données audio et/ou vidéo depuis le module de capture (11, 12).

6. Procédé selon l'une quelconque des revendications précédentes comprenant, avant l'étape de réception (103, 205) par le dispositif électronique (10) d'au moins une première donnée de communication depuis au moins un serveur informatique (40, 40a, 40b), les étapes suivantes :
• Actionnement dudit unique bouton de commande par au moins un doigt dudit résident ;
• En réponse audit actionnement, envoi par ledit dispositif de commande (20, 20a, 20b, 20c) d'une donnée de commande préliminaire vers le dispositif électronique (10), de préférence la donnée de communication préliminaire comprenant une demande d'appel audio et/ou vidéo ;
• Réception par ledit dispositif électronique (10) d'au moins une donnée de commande préliminaire depuis ledit dispositif de commande (20, 20a, 20b, 20c) ;
• Envoi par le dispositif électronique (10) d'au moins une donnée de communication préliminaire vers au moins un serveur informatique (40, 40a, 40b) ;
• Réception par le serveur informatique (40, 40a, 40b) de ladite donnée de communication préliminaire depuis le dispositif électronique (10) ;
• Envoi par le serveur informatique (40, 40a, 40b) de ladite donnée de communication préliminaire vers au moins un terminal utilisateur (50).

7. Procédé selon l'une quelconque des revendications précédentes comprenant, avant et/ou après l'envoi (109, 215) depuis le dispositif électronique (10) de la première donnée de communication vers le dispositif d'affichage (30), au moins une étape d'envoi depuis le dispositif électronique (10) d'au moins une instruction d'affichage de la donnée de communication vers le dispositif d'affichage (30) et, de préférence, dans lequel l'envoi depuis le dispositif électronique (10) d'au moins une instruction d'affichage de la donnée de communication vers le dispositif d'affichage (30) est réalisé au travers d'au moins une liaison optique (32) entre le dispositif électronique (10) et le dispositif d'affichage (30).

8. Système d'affichage d'au moins une donnée de communication sur au moins un téléviseur (30) configuré pour afficher ladite donnée de communication et étant disposé dans un espace de vie d'au moins un résident comprenant au moins :
• Un dispositif électronique (10) étant configuré pour :
- recevoir au moins ladite donnée de communication depuis au moins un serveur informatique (40, 40a, 40b),
- envoyer au moins ladite donnée de communication, et de préférence au moins une instruction d'affichage, audit dispositif d'affichage (30) ;
- envoyer au moins une notification à au moins un dispositif de commande (20, 20a, 20b, 20c) ;
- recevoir au moins une donnée de commande depuis au moins un dispositif de commande (20, 20a, 20b, 20c) ;
• Ledit dispositif de commande (20, 20a, 20b, 20c) comprenant un unique bouton de commande et étant configuré pour :
- recevoir au moins ladite notification depuis ledit dispositif électronique (10) ;
- générer au moins une notification prise parmi au moins : une notification visuelle, une notification auditive, une notification tactile ;
- émettre ladite donnée de commande vers ledit dispositif électronique (10) au moyen d'une communication sans fil (21) par actionnement dudit bouton de commande par au moins un doigt d'un résident (60).

9. Système selon la revendication précédente dans lequel le dispositif de commande (20, 20a, 20b, 20c) est configuré pour être porté par le résident, de préférence sous la forme d'une broche, d'un badge ou d'un bracelet.

10. Système selon l'une quelconque des deux revendications précédentes dans lequel le dispositif de commande (20, 20a, 20b, 20c) est conformé pour tenir dans la main d'un résident.

11. Système selon l'une quelconque des trois revendications précédentes dans lequel le dispositif électronique (10) pilote le dispositif d'affichage (30) au moyen d'une liaison électrique (31).

12. Système selon l'une quelconque des quatre revendications précédentes dans lequel le dispositif électronique (10) pilote le dispositif d'affichage (30) au moyen d'une liaison optique (32) et, de préférence, dans lequel le dispositif d'affichage (30) comprend au moins une entrée audio et/ou vidéo configurée pour recevoir au moins un flux de données audio et/ou vidéo et au moins un port de communication optique, de préférence infrarouge, configuré pour recevoir au moins une instruction depuis au moins une télécommande différente du dispositif électronique (10) et du dispositif de commande (20, 20a, 20b, 20c), le dispositif électronique (10) étant configuré pour piloter le dispositif d'affichage (30) au travers de l'envoi d'au moins un signal optique comprenant au moins une instruction vers ledit port de communication optique.

13. Système selon l'une quelconque des cinq revendications précédentes comprenant une pluralité de dispositifs de commande (20, 20a, 20b, 20c) distincts les uns des autres, physiquement séparés et configurés pour émettre d'uniques données de commande différentes les unes des autres vers le dispositif électronique (10).

14. Système selon l'une quelconque des six revendications précédentes dans lequel le dispositif électronique (10) est destiné à être en communication avec au moins un module de capture audio (11) et/ou un module de capture vidéo (12).

15. Système selon l'une quelconque des sept revendications précédentes dans lequel le dispositif électronique (10) comprend au moins un processeur, au moins une mémoire non transitoire stockant un produit programme d'ordinateur comportant des instructions exécutables par ledit au moins un processeur, lesdites instructions étant configurées pour exécuter en partie au moins le procédé selon l'une quelconque des revendications 1 à 7.

## Patentansprüche

1. Verfahren zum Anzeigen von mindestens einem Kommunikationsdatenelement auf mindestens einer Anzeigevorrichtung (30), wie etwa einem Fernseher, der in einem Lebensraum mindestens eines Bewohners angeordnet ist, wobei das Kommunikationsdatenelement ausgewählt ist aus mindestens: einem Text, einem Bild, einem Audio- und/oder Videodatenstrom, einer Bitte um Audiound/oder Videoanruf, einer Audio- und/oder Videoaufzeichnung, wobei das Anzeigeverfahren mindestens die folgenden Schritte umfasst:
- Empfangen (103, 205) mindestens eines ersten Kommunikationsdatenelements durch eine elektronische Vorrichtung (10), die sich in dem Lebensraum befindet, von mindestens einem IT-Server (40, 40a, 40b), der über mindestens ein Kommunikationsnetzwerk mit der elektronischen Vorrichtung (10) in Kommunikation steht;
- Senden (106, 206) mindestens einer Benachrichtigung durch die elektronische Vorrichtung (10) an mindestens eine Bedienvorrichtung (20, 20a, 20b, 20c), die eine einzige Bedientaste umfasst;
- Empfangen der Benachrichtigung durch die Bedienvorrichtung (20, 20a, 20b, 20c);
- anschließend Erzeugen mindestens einer Benachrichtigung durch die Bedienvorrichtung (20, 20a, 20b, 20c) für den Bewohner, wobei die Benachrichtigung ausgewählt ist aus mindestens: einer visuellen Benachrichtigung, einer auditiven Benachrichtigung, einer taktilen Benachrichtigung;
- Betätigen (107, 208) der einzigen Bedientaste der Bedienvorrichtung (20, 20a, 20b, 20c) in Reaktion auf die Benachrichtigung mit mindestens einem Finger des Bewohners, und
- Senden eines Bediendatenelements durch die Bedienvorrichtung (20, 20a, 20b, 20c) in Reaktion auf die Betätigung über eine nicht drahtgebundene Kommunikation an die elektronische Vorrichtung (10);
- Empfangen (108, 209) des Bediendatenelements von der Bedienvorrichtung (20, 20a, 20b, 20c) durch die elektronische Vorrichtung (10);
- Senden (109, 215) des ersten Kommunikationsdatenelements von der elektronischen Vorrichtung (10) an die Anzeigevorrichtung (30);
- Anzeigen des ersten Kommunikationsdatenelements durch die Anzeigevorrichtung (30).

2. Verfahren nach dem vorstehenden Anspruch, das vor und/oder nach dem Empfangen (108) des Bediendatenelements von der Bedienvorrichtung (20, 20a, 20b, 20c) durch die elektronische Vorrichtung (10) mindestens einen Schritt des Sendens mindestens einer Anweisung zum Umschalten von einer ersten Videoquelle auf eine zweite Videoquelle von der elektronischen Vorrichtung (10) an die Anzeigevorrichtung (30) umfasst.

3. Verfahren nach einem der vorstehenden Ansprüche, das vor und/oder nach dem Schritt des Sendens (106) der Benachrichtigung durch die elektronische Vorrichtung (10) an die Bedienvorrichtung (20, 20a, 20b, 20c) mindestens einen Schritt des Speicherns des ersten Kommunikationsdatenelements in mindestens einem nichtflüchtigen Speichermodul der elektronischen Vorrichtung (10) umfasst.

4. Verfahren nach einem der vorstehenden Ansprüche, das nach dem Schritt des Empfangens (108) des Bediendatenelements von der Bedienvorrichtung (20, 20a, 20b, 20c) durch die elektronische Vorrichtung (10) mindestens die folgenden Schritte umfasst:
- Senden (212) mindestens eines ersten Audio- und/oder Videodatenstroms durch die elektronische Vorrichtung (10) an mindestens einen IT-Server (40, 40a, 40b);
- Empfangen mindestens eines zweiten Audio- und/oder Videodatenstroms von einem IT-Server (40, 40a, 40b) durch die elektronische Vorrichtung (10), wobei der zweite Audio- und/oder Videodatenstrom von mindestens einem Benutzerendgerät (50) stammt.

5. Verfahren nach dem vorstehenden Anspruch, das vor dem Schritt des Sendens (212) mindestens eines ersten Audio- und/oder Videodatenstroms durch die elektronische Vorrichtung (10) an mindestens einen IT-Server (40, 40a, 40b) mindestens die folgenden Schritte umfasst:
- Senden (210) mindestens einer Anweisung zum Aktivieren mindestens eines Aufnahmemoduls von der elektronischen Vorrichtung (10) an mindestens ein Aufnahmemodul, wobei das Aufnahmemodul (11, 12) ausgewählt ist aus mindestens einem Audio-Aufnahmemodul (11) und/oder einem Video-Aufnahmemodul (12);
- Empfangen der Aktivierungsanweisung von der elektronischen Vorrichtung (10) durch das Aufnahmemodul (11, 12);
- Aktivieren des Aufnahmemoduls (11, 12);
- Senden des ersten Audio- und/oder Videodatenstroms durch das Aufnahmemodul (11, 12) an die elektronische Vorrichtung (10);
- Empfangen (211) des ersten Audio- und/oder Videodatenstroms vom Aufnahmemodul (11, 12) durch die elektronische Vorrichtung (10).

6. Verfahren nach einem der vorstehenden Ansprüche, das vor dem Schritt des Empfangens (103, 205) mindestens eines ersten Kommunikationsdatenelements von mindestens einem IT-Server (40, 40a, 40b) durch die elektronische Vorrichtung (10) die folgenden Schritte umfasst:
- Betätigen der einzigen Bedientaste mit mindestens einem Finger des Bewohners;
- Senden eines vorläufigen Bediendatenelements durch die Bedienvorrichtung (20, 20a, 20b, 20c) in Reaktion auf die Betätigung an die elektronische Vorrichtung (10), wobei das vorläufige Kommunikationsdatenelement vorzugsweise eine Bitte um Audiound/oder Videoanruf umfasst;
- Empfangen mindestens eines vorläufigen Bediendatenelements von der Bedienvorrichtung (20, 20a, 20b, 20c) durch die elektronische Vorrichtung (10);
- Senden mindestens eines vorläufigen Kommunikationsdatenelements durch die elektronische Vorrichtung (10) an mindestens einen IT-Server (40, 40a, 40b);
- Empfangen des vorläufigen Kommunikationsdatenelements von der elektronischen Vorrichtung (10) durch den IT-Server (40, 40a, 40b);
- Senden des vorläufigen Kommunikationsdatenelements durch den IT-Server (40, 40a, 40b) an mindestens ein Benutzerendgerät (50).

7. Verfahren nach einem der vorstehenden Ansprüche, das vor und/oder nach dem Senden (109, 215) des ersten Kommunikationsdatenelements von der elektronischen Vorrichtung (10) an die Anzeigevorrichtung (30) mindestens einen Schritt des Sendens mindestens einer Anweisung zum Anzeigen des Kommunikationsdatenelements von der elektronischen Vorrichtung (10) an die Anzeigevorrichtung (30) umfasst, und wobei das Senden mindestens einer Anweisung zum Anzeigen des Kommunikationsdatenelements von der elektronischen Vorrichtung (10) an die Anzeigevorrichtung (30) vorzugsweise über mindestens eine optische Verbindung (32) zwischen der elektronischen Vorrichtung (10) und der Anzeigevorrichtung (30) ausgeführt wird.

8. System zum Anzeigen mindestens eines Kommunikationsdatenelements auf mindestens einem Fernseher (30), der dafür ausgelegt ist, das Kommunikationsdatenelement anzuzeigen und in einem Lebensraum mindestens eines Bewohners angeordnet ist, mindestens umfassend:
- eine elektronische Vorrichtung (10), die dafür ausgelegt ist:
-- mindestens das Kommunikationsdatenelement von mindestens einem IT-Server (40, 40a, 40b) zu empfangen,
-- mindestens das Kommunikationsdatenelement, und vorzugsweise mindestens eine Anzeigeanweisung, an die Anzeigevorrichtung (30) zu senden;
-- mindestens eine Benachrichtigung an mindestens eine Bedienvorrichtung (20, 20a, 20b, 20c) zu senden;
-- mindestens ein Bediendatenelement von mindestens einer Bedienvorrichtung (20, 20a, 20b, 20c) zu empfangen;
- wobei die Bedienvorrichtung (20, 20a, 20b, 20c) eine einzige Bedientaste umfasst und dafür ausgelegt ist:
-- mindestens die Benachrichtigung von der elektronischen Vorrichtung (10) zu empfangen;
-- mindestens eine Benachrichtigung, ausgewählt aus mindestens: einer visuellen Benachrichtigung, einer auditiven Benachrichtigung, einer taktilen Benachrichtigung, zu erzeugen;
-- auf Betätigen der Bedientaste mit mindestens einem Finger eines Bewohners (60) das Bediendatenelement mittels einer drahtlosen Kommunikation (21) an die elektronische Vorrichtung (10) auszugeben.

9. System nach dem vorstehenden Anspruch, wobei die Bedienvorrichtung (20, 20a, 20b, 20c) dafür ausgelegt ist, vorzugsweise in Form einer Brosche, eines Ansteckers oder eines Armbands von dem Bewohner getragen zu werden.

10. System nach einem der zwei vorstehenden Ansprüche, wobei die Bedienvorrichtung (20, 20a, 20b, 20c) dafür ausgestaltet ist, in die Hand eines Bewohners zu passen.

11. System nach einem der drei vorstehenden Ansprüche, wobei die elektronische Vorrichtung (10) die Anzeigevorrichtung (30) mittels einer elektrischen Verbindung (31) ansteuert.

12. System nach einem der vier vorstehenden Ansprüche, wobei die elektronische Vorrichtung (10) die Anzeigevorrichtung (30) mittels einer optischen Verbindung (32) ansteuert, und wobei die Anzeigevorrichtung (30) vorzugsweise mindestens einen Audio- und/oder Videoeingang, der dafür ausgelegt ist, mindestens einen Audio- und/oder Videodatenstrom zu empfangen, und mindestens einen optischen, vorzugsweise Infrarot-, Kommunikationsport umfasst, der dafür ausgelegt ist, mindestens eine Anweisung von mindestens einer Fernbedienung, welche sich von der elektronischen Vorrichtung (10) und der Bedienvorrichtung (20, 20a, 20b, 20c) unterscheidet, zu empfangen, wobei die elektronische Vorrichtung (10) dafür ausgelegt ist, die Anzeigevorrichtung (30) durch Senden mindestens eines optischen Signals, welches mindestens eine Anweisung umfasst, an den optischen Kommunikationsport anzusteuern.

13. System nach einem der fünf vorstehenden Ansprüche, das eine Vielzahl von voneinander verschiedenen Bedienvorrichtungen (20, 20a, 20b, 20c) umfasst, die physisch getrennt und dafür ausgelegt sind, eindeutige Bediendatenelemente, die sich voneinander unterscheiden, an die elektronische Vorrichtung (10) auszugeben.

14. System nach einem der sechs vorstehenden Ansprüche, wobei die elektronische Vorrichtung (10) dazu bestimmt ist, mit mindestens einem Audio-Aufnahmemodul (11) und/oder einem Video-Aufnahmemodul (12) in Kommunikation zu stehen.

15. System nach einem der sieben vorstehenden Ansprüche, wobei die elektronische Vorrichtung (10) mindestens einen Prozessor umfasst, wobei mindestens ein nichtflüchtiger Speicher ein Computerprogrammprodukt speichert, das Anweisungen umfasst, die von dem mindestens einen Prozessor ausgeführt werden können, wobei die Anweisungen dafür ausgelegt sind, mindestens zum Teil das Verfahren nach einem der Ansprüche 1 bis 7 auszuführen.

## Claims

1. Method for displaying at least one communication datum on at least one display device (30), such as a television set, disposed in a living space of at least one resident, said communication datum being selected from at least: a text, an image, an audio and/or video data stream, an audio and/or video call request, and an audio and/or video recording, said display method comprising at least the following steps of:
- Receiving (103, 205), via an electronic device (10) located in said living space, at least a first communication datum from at least one computer server (40, 40a, 40b) in communication with the electronic device (10) over at least one communication network;
- Sending (106, 206), via the electronic device (10), at least one notification to at least one control device (20, 20a, 20b, 20c) comprising a single control button;
- Receiving said notification via said control device (20, 20a, 20b, 20c);
- Then generating, via said control device (20, 20a, 20b, 20c), at least one notification intended for said resident, said notification being selected from at least: a visual notification, an auditory notification, and a tactile notification;
- In response to said notification, actuating (107, 208) the single control button of the control device (20, 20a, 20b, 20c) using at least one finger of the resident, and
- in response to said actuation, sending, via the control device (20, 20a, 20b, 20c), a control datum to the electronic device (10) via a wireless communication;
- Receiving (108, 209), via the electronic device (10), said control datum from the control device (20, 20a, 20b, 20c);
- Sending (109, 215), from the electronic device (10), the first communication datum to the display device (30);
- Displaying, via said display device (30), said first communication datum.

2. Method according to the preceding claim comprising, before and/or after the electronic device (10) receives (108) the control datum from the control device (20, 20a, 20b, 20c), at least one step of sending, from the electronic device (10) to the display device (30), at least one instruction to switch from a first video source to a second video source.

3. Method according to any one of the preceding claims comprising, before and/or after the step of the electronic device (10) sending (106) the notification to the control device (20, 20a, 20b, 20c), at least one step of storing the first communication datum in at least one non-transitory storage module of said electronic device (10).

4. Method according to any one of the preceding claims comprising, after the step of the electronic device (10) receiving (108) the control datum from said control device (20, 20a, 20b, 20c), at least the following steps of:
- Sending (212), via said electronic device (10), to at least one computer server (40, 40a, 40b), at least a first audio and/or video data stream;
- Receiving, via the electronic device (10), at least a second audio and/or video data stream from a computer server (40, 40a, 40b), the second audio and/or video data stream coming from at least one user terminal (50).

5. Method according to the preceding claim comprising, prior to the step of said electronic device (10) sending (212), to at least one computer server (40, 40a, 40b), at least a first audio and/or video data stream, at least the following steps of:
- Sending (210), from the electronic device (10), at least one instruction to activate at least one capture module to at least one capture module, the capture module (11, 12) being selected from at least one audio capture module (11) and/or one video capture module (12);
- Receiving, via the capture module (11, 12), the activation instruction from the electronic device (10);
- Activating the capture module (11, 12);
- Sending, via the capture module (11, 12), the first audio and/or video data stream to the electronic device (10);
- Receiving (211), via the electronic device (10), the first audio and/or video data stream from the capture module (11, 12).

6. Method according to any one of the preceding claims comprising, prior to the step of receiving (103, 205), via the electronic device (10), at least a first communication datum from at least one computer server (40, 40a, 40b), the following steps of:
- Actuating said single control button using at least one finger of said resident;
- In response to said actuation, sending, via said control device (20, 20a, 20b, 20c), a preliminary control datum to the electronic device (10), preferably the preliminary communication datum comprising an audio and/or video call request;
- Receiving, via said electronic device (10), at least one preliminary control datum from said control device (20, 20a, 20b, 20c);
- Sending, via the electronic device (10), at least one preliminary communication datum to at least one computer server (40, 40a, 40b);
- Receiving, via the computer server (40, 40a, 40b), said preliminary communication datum from the electronic device (10);
- Sending, via the computer server (40, 40a, 40b), said preliminary communication datum to at least one user terminal (50).

7. Method according to any one of the preceding claims comprising, before and/or after the electronic device (10) sends (109, 215) the first communication datum to the display device (30), at least one step of sending, from the electronic device (10), at least one instruction to display the communication datum to the display device (30) and, preferably, wherein the sending from the electronic device (10) of at least one instruction to display the communication datum to the display device (30) is carried out via at least one optical connection (32) between the electronic device (10) and the display device (30).

8. System for displaying at least one communication datum on at least one television set (30) configured to display said communication datum and being disposed in a living space of at least one resident, comprising at least:
- An electronic device (10) being configured for:
-- receiving at least said communication datum from at least one computer server (40, 40a, 40b),
-- sending at least said communication datum, and preferably at least one display instruction, to said display device (30);
-- sending at least one notification to at least one control device (20, 20a, 20b, 20c);
-- receiving at least one control datum from at least one control device (20, 20a, 20b, 20c);
- Said control device (20, 20a, 20b, 20c) comprising a single control button and being configured for:
-- receiving at least said notification from said electronic device (10);
-- generating at least one notification selected from at least: a visual notification, an auditory notification, and a tactile notification;
-- transmitting said control datum to said electronic device (10) by means of a wireless communication (21) by actuating said control button using at least one finger of a resident (60).

9. System according to the preceding claim, wherein the control device (20, 20a, 20b, 20c) is configured to be worn by the resident, preferably in the form of a pin, badge or bracelet.

10. System according to any one of the preceding two claims, wherein the control device (20, 20a, 20b, 20c) is shaped to fit in the hand of a resident.

11. System according to any one of the preceding three claims, wherein the electronic device (10) controls the display device (30) by means of an electrical connection (31).

12. System according to any one of the preceding four claims, wherein the electronic device (10) controls the display device (30) by means of an optical connection (32) and, preferably, wherein the display device (30) comprises at least one audio and/or video input configured to receive at least one audio and/or video data stream and at least one optical, preferably infrared, communication port configured to receive at least one instruction from at least one remote control that is different from the electronic device (10) and from the control device (20, 20a, 20b, 20c), the electronic device (10) being configured to control the display device (30) by sending at least one optical signal comprising at least one instruction to said optical communication port.

13. System according to any one of the preceding five claims, comprising a plurality of control devices (20, 20a, 20b, 20c) distinct from one another, physically separate and configured to transmit unique control data different from one another to the electronic device (10).

14. System according to any one of the preceding six claims, wherein the electronic device (10) is intended to be in communication with at least one audio capture module (11) and/or one video capture module (12).

15. System according to any one of the preceding seven claims, wherein the electronic device (10) comprises at least one processor, at least one non-transitory memory storing a computer program product including instructions that can be executed by said at least one processor, said instructions being configured to at least partially execute the method according to any one of claims 1 to 7.
